# EUROPÄISCHE PATENTSCHRIFT

(11) **EP 2 125 587 B1**
(45) Veröffentlichungstag und Bekanntmachung des Hinweises auf die Patenterteilung: **29.08.2012**
(21) Anmeldenummer: 07857136.1
(22) Anmeldetag: 28.12.2007
(51) Int. Cl.: B65G 61/00, B65G 47/90, B65G 11/02

(54) **VORRICHTUNG UND VERFAHREN ZUR UMSETZUNG VON STÜCKGUT**
APPARATUS AND METHOD FOR TRANSFERRING PART LOADS
DISPOSITIF ET PROCEDE DE TRANSFERT DE MARCHANDISES DE DETAIL

(30) Priorität: 29.12.2006 DE 102006062528
(43) Veröffentlichungstag der Anmeldung: 02.12.2009
(73) Patentinhaber: Deutsche Post AG, 53113 Bonn (DE)
(72) Erfinder: ECHELMEYER, Wolfgang, 27711 Osterholz-Scharmbeck (DE); FRANCK, Hermann, 27721 Ritterhude (DE)
(74) Vertreter: Jostarndt, Hans-Dieter
(86) Internationale Anmeldenummer: PCT/EP2007/011441
(87) Internationale Veröffentlichungsnummer: WO 2008/080608

(56) Entgegenhaltungen:
- EP-A- 0 342 825
- DE-U1- 20 107 571
- US-A- 3 804 270
- US-A- 4 031 998
- US-A1- 2004 207 150

## Beschreibung

Die Erfindung betrifft eine Vorrichtung zur Umsetzung von Stückgut von einer ersten Position X zu einer zweiten Position Y. Die Vorrichtung weist wenigstens eine Greifvorrichtung auf, die über eine Antriebsvorrichtung in vertikaler Richtung und in wenigstens einer horizontalen Richtung bewegbar ist. Die Greifvorrichtung umfasst ferner mehrere Greifmittel, von denen jeweils wenigstens zwei getrennt voneinander ansteuerbar sind. Die Vorrichtung weist Steuerungsmittel zur sequentiellen Aufhebung der Greifwirkung der Greifmittel nach einem festen schema sowie eine Führungseinrichtung zur Lenkung des Stückguts auf die zweite Position auf.

Die Erfindung betrifft ferner ein zugehöriges Verfahren zur Umsetzung von Stückgut.

Aus dem Stand der Technik (vgl. z.B. das gattungsbildende DE 20107571U) sind verschiedene Vorrichtungen und Verfahren bekannt, mit denen Gegenstände automatisiert von einer ersten Position zu einer zweiten Position umgesetzt werden können. Insbesondere im Bereich der Kommissionierung von Behältern, Paletten oder sonstigen Warenträgern haben sich dabei Roboter als vorteilhaft erwiesen, welche die erforderlichen manuellen Tätigkeiten ersetzen können. Neben der Beladung von Behältern und Paletten können Roboter diese auch automatisiert entladen, um Stückgüter von der jeweiligen Transporteinrichtung zu einer neuen Position zu bewegen.

Ein Anwendungsgebiet für Roboter stellt die Be- und Entladung von im Wesentlichen quaderförmigen Paketen dar, in denen Güter verpackt sind, die beispielsweise in Kartons, Schachteln oder Folie eingebracht wurden. Auch postalische Pakete können durch Roboter umgeladen werden.

Derartige Roboter können verschiedene Greifvorrichtungen zur Aufnahme von Gegenständen an einer ersten Position und zur anschließenden Freigabe der Gegenständen an einer zweiten Position verwenden. Die Greifvorrichtungen sind üblicherweise auf die Beschaffenheit des jeweiligen Gegenstand abgestimmt. Beispielsweise können zangenförmige Greifer, Heber in Form von Platten oder Gabeln und Saugvorrichtungen zum Einsatz kommen.

Aus der deutschen Offenlegungsschrift DE 28 28 860 A1 ist beispielsweise eine Vorrichtung zum Be- und Entladen von Paletten bekannt, die als Auslegertyp einen Greifkopf aufweist, der in drei Richtungen verfahren und um eine senkrechte Achse geschwenkt werden kann. So kann ein Paket von einem Förderband aufgenommen und gezielt auf einer neben dem Förderband positionierten Palette abgesetzt werden. Die Platzierung erfolgt über eine Automatisierungseinheit, die durch eine Programmiermatrix gesteuert wird. Der Greifkopf kann durch eine Saugvorrichtung oder eine Gabel gebildet werden.

Üblicherweise wird es angestrebt, den Be- oder Entladungsvorgang möglichst schnell durchzuführen. Dabei führt die einzelne Aufnahme und Umsetzung von Gegenständen zu einem erheblichen Zeitverlust, so dass eine Vorrichtung nach dem Prinzip der DE 28 28 860 A1 keine schnelle Umsetzung aller Gegenstände auf einer Palette erzielen kann. Ferner erfordert die einzelne Aufnahme von Gegenständen eine genaue Ausrichtung des Gegenstands in einer Aufnahmeposition und/oder eine sehr präzise Ansteuerung der Greifvorrichtung. Daher wird in einigen Anwendungsgebieten die gleichzeitige Aufnahme mehrerer Gegenstände bevorzugt.

Um von einem Stapel an Gegenständen gleicher Form die oberste Lage abtragen zu können, obwohl in der obersten Lage einzelne Positionen nicht mit Gegenständen gefüllt sind, schlägt die europäische Patentschrift EP 0 616 962 B1 beispielsweise ein Verfahren zur Detektion der Zahl der Reihen von Gegenständen der obersten Stapelschicht auf einer Palette vor. Dabei ermitteln Fühler mit Detektorzellen fehlende Gegenstände und steuern die Greifmittel entsprechend an. Dies stellt ein effektives, aber sehr aufwändiges Verfahren zur Aufnahme mehrerer Gegenstände dar.

Ferner liegen in einer Lage oftmals Gegenstände unterschiedlicher Höhe vor, was bei der Aufnahme ebenfalls berücksichtigt werden muss. Dies ist beispielsweise im postalischen Bereich der Fall, bei dem Pakete unterschiedlicher Größe auf einer Palette transportiert werden.

Dazu offenbart die europäische Patentschrift EP 0 550 114 B1 eine Vorrichtung zum gleichzeitigen Greifen und Bewegen von mehreren Gegenständen unterschiedlicher Größe. Die Vorrichtung verwendet dazu mehrere Saugköpfe, die auf eine Lage von aufzunehmenden Gegenständen abgesenkt wird. Da die Gegenstände unterschiedliche Höhen aufweisen können, senken sich die Saugköpfe unterschiedlich weit ab, um durch Aufbringung eines Unterdrucks an jedem Saugkopf die gesamte Lage an Gegenständen gleichzeitig aufnehmen zu können. Die Greifvorrichtung hebt sich an und senkt sich an einer anderen Position wieder ab, um die Gegenstände durch Auflösung des Unterdrucks wieder gleichzeitig loszulassen. Dies stellt jedoch ebenfalls eine aufwändige Konstruktion mit mehreren Sensoren und beweglichen Teilen dar, was die Vorrichtung sehr anfällig für Störungen macht.

Oftmals soll eine ganze Lage von Gegenständen nicht wieder in ihrer Gesamtheit abgesetzt werden, sondern die Gegenstände sollen hintereinander beispielsweise auf einem Förderband positioniert werden, um von diesem zu der nächsten Bearbeitungsstation befördert zu werden. Üblicherweise werden die Gegenstände dazu in Reihen aufgenommen und in der gleichen Reihe wieder abgesetzt. Dies ermöglicht keine Umsetzung ganzer Lagen, sondern eine Lage muss reihenweise abgetragen werden, was somit erneut einen Zeitverlust verursacht.

Aus der deutschen Offenlegungsschrift DE 103 52 279 A1 ist ferner eine Vorrichtung zur Handhabung von Objekten bekannt, die aufgenommene Objekte sequentiell ausrichtet und ablegt. Bei der Aufnahme von mehreren Gegenständen werden nur diejenigen Greifelemente angesteuert, die für die Aufnahme der regelmäßig oder unregelmäßig angeordneten Objekte einer Lage erforderlich sind. Dies erfordert jedoch Sensorinformationen zur aktiven Ansteuerung einzelner Greifelemente. Diese Bereitstellung und Auswertung von Sensorinformationen zur Bestimmung der Abmessung und Orientierung jedes einzelnen Objektes stellt ebenfalls ein aufwändiges und störanfälliges Verfahren dar.

Die Umsetzung einer gesamten Lage von Gegenständen unterschiedlicher Größe und Anordnung zu einer Reihe ist somit im Stand der Technik noch nicht zufriedenstellend gelöst. Insbesondere da die bekannten Vorrichtungen üblicherweise eine aufwändige Sensorik, große Abmessungen und störanfällige Bauteile umfassen, ist es die Aufgabe der Erfindung, eine einfache und kompakte Vorrichtung zur Umsetzung von Stückgut zwischen wenigstens zwei Positionen bereitzustellen, die eine Lage von mehreren Gegenständen unterschiedlicher Größe und Anordnung von einer ersten Position aufnehmen und nacheinander in einer Reihe an einer zweiten Position ablegt.

Aufgabe der Erfindung ist ferner die Bereitstellung eines zugehörigen Verfahrens zur Umsetzung von Stückgut.

Erfindungsgemäß wird diese Aufgabe durch eine Vorrichtung mit den Merkmalen des unabhängigen Anspruchs 1 gelöst. Vorteilhafte Weiterbildungen der Vorrichtung ergeben sich aus den Unteransprüchen 2-16. Die Aufgabe wird ferner durch ein Verfahren mit den Merkmalen des Anspruchs 17 gelöst. Vorteilhafte Weiterbildungen des Verfahrens ergeben sich aus den Unteransprüchen 18-23.

Die erfindungsgemäße Vorrichtung zur Umsetzung von Stückgut von einer ersten Position X zu einer zweiten Position Y weist wenigstens eine Greifvorrichtung auf, die über eine Antriebsvorrichtung in vertikaler Richtung und in wenigstens einer horizontalen Richtung bewegbar ist. Die Greifvorrichtung umfasst dabei mehrere Greifelemente, von denen jeweils wenigstens zwei getrennt voneinander ansteuerbar sind. Die Vorrichtung weist ferner Steuerungsmittel zur sequentiellen Aufhebung der Greifwirkung der Greifelemente auf, wobei die Steuerungsmittel für eine sequentielle Aufhebung der Greifwirkung der Greifelemente nach einem festen Schema ausgebildet sind.

In einem Ausführungsbeispiel der Erfindung umfasst die Greifvorrichtung wenigstens zwei Reihen aus jeweils wenigstens zwei Greifelementen und die Steuerungsmittel der Vorrichtung sind für eine reihenweise Aufhebung der Greifwirkung der Greifelemente ausgebildet.

Bei den Greifelementen kann es sich beispielsweise um Klemmeinrichtungen handeln, mit denen das Stückgut aufnehmbar ist, wobei die Klemmwirkung der Klemmeinrichtungen sequentiell auflösbar ist. Bei den Greifelementen kann es sich ferner um Saugeinrichtungen handeln, von denen wenigstens zwei jeweils getrennt voneinander mit einer Unterdruckquelle verbunden sind und die Vorrichtung Steuerungsmittel zur sequentiellen Auflösung des Unterdrucks in den Saugeinrichtungen aufweist.

Erfindungsgemäβ weist die Vorrichtung die Führungseinrichtung zur Lenkung des Stückguts auf die zweite Position Y auf. Diese Führungseinrichtung wird durch ein schräg gestelltes Leitblech mit einem Bodenblech und zwei Seitenwänden gebildet welche trichterförmig aufeinander zulaufen.

In einem bevorzugten Ausführungsbeispiel der Erfindung befindet sich die Antriebsvorrichtung innerhalb eines Gehäuses, das oberhalb der ersten Position X angeordnet ist. Das Gehäuse kann beispielsweise in Portalbauweise durch wenigstens zwei im Wesentlichen senkrecht stehende Seitenstreben und eine obere Querstrebe gebildet sein. Als besonders vorteilhaft haben sich dabei vier in einem Rechteck angeordnete, im Wesentlichen senkrecht stehende, Seitenstreben und vier, die Seitenstreben verbindende, obere Querstreben erwiesen.

Bei der Antriebsvorrichtung handelt es sich beispielsweise um einen Knickarmroboter, der am Gehäuse der Vorrichtung angebracht ist. Der Knickarmroboter kann über eine Schiene in horizontaler Richtung bewegbar sein. Die Schiene ist beispielsweise an wenigstens einer oberen Querstrebe des Gehäuses angebracht.

In einem bevorzugten Ausführungsbeispiel der Erfindung befindet sich die zweite Position Y außerhalb des Gehäuses. Die Führungseinrichtung ist am Gehäuse befestigt und befindet sich ebenfalls außerhalb des Gehäuses.

In einem bevorzugten Ausführungsbeispiel der Erfindung ist die Vorrichtung auf einer beweglichen Grundplatte montiert. An der Grundplatte können Mittel zum Eingreifen einer Transportvorrichtung angebracht sein. Bei den Mitteln zum Eingreifen eines Transportmittels kann es sich beispielsweise um Staplertaschen handeln.

Darüber hinaus kann die Vorrichtung in der ersten Position X Mittel zur Ausrichtung einer Trageinrichtung wie einer Palette oder einem Behälter aufweisen, auf welcher das Stückgut zur Aufnahme positioniert ist.

Von der Erfindung umfasst ist ferner ein Verfahren zur Umsetzung von Stückgut mit der erfindungsgemäßen Vorrichtung. Das Verfahren sieht vor, dass das Stückgut von der Greifvorrichtung an der ersten Position X aufgenommen wird und die Greifvorrichtung über die Antriebsvorrichtung in vertikaler Richtung und wenigstens einer horizontalen Richtung zur zweiten Position Y bewegt wird. An der zweiten Position Y steuern Steuerungsmittel wenigstens zwei der Greifelemente getrennt voneinander an und die Greifwirkung der Greifelemente wird sequentiell nach einem festen Schema aufgehoben. Das Stückgut wird dabei vorzugsweise von der Antriebsvorrichtung zu einer Position Y oberhalb eines Transportbandes bewegt.

Die Greifvorrichtung umfasst wenigstens zwei Reihen aus jeweils wenigstens zwei Greifelementen und die Aufhebung der Greifwirkung der Greifelemente erfolgt vorzugsweise reihenweise. Die wenigstens zwei Reihen aus jeweils wenigstens zwei Greifelementen erstrecken sich vorzugsweise in Transportrichtung des Transportbandes und die Steuerungsmittel der Vorrichtung beginnen die Aufhebung der Greifwirkung der Greifelemente in einer äußeren Reihe und setzen diese reihenweise fort.

In einem Ausführungsbeispiel der Erfindung ist die Aufhebung der Greifwirkung der Greifelemente mit dem Vorschub des Transportbandes getaktet.

Die erfindungsgemäße Vorrichtung und das zugehörige Verfahren ermöglichen es, mehrere Stückgüter unterschiedlicher Größe und Ausrichtung gleichzeitig an einer ersten Position X aufzunehmen und auf einfache Weise nacheinander an einer zweiten Position Y abzusetzen. Insbesondere durch den Einsatz eines Transportbandes an der zweiten Position Y kann so aus mehreren Stückgütern, die beispielsweise auf einer Palette nebeneinander und übereinander gestapelt sind, eine Reihe von Stückgütern erzeugt werden, die von dem Transportband nacheinander abtransportiert werden kann.

Statt eines Transportbandes können an der zweiten Position Y alternativ jegliche andere Mittel zur Annahme des Stückguts vorgesehen sein. Beispielsweise können die Gegenstände als Zuführung zu einem Förderer auf einer schiefen Ebene abgelegt werden. Diese Zuführung kann die Gegenstände auf ein oder auch mehrere Förderbänder verteilen. Die Gegenstände können auch direkt in Behälter oder Transportwagen abgelegt werden, welche die Objekte einzeln abtransportieren.

Bei dem erfindungsgemäßen Verfahren zum Betrieb der Vorrichtung wird zwar in Kauf genommen, dass bei einem Umsetzvorgang nicht immer alle Objekte einer Lage gleichzeitig angehoben werden, da das Stückgut unterschiedliche Höhen haben kann und bei jedem Umsetzvorgang nur die Objekte mit der größten Höhe angehoben werden können. Durch wiederholte Umsetzvorgänge kann jedoch eine gesamte Lage und damit eine Palette vollständig abgetragen werden. Diese Vorgehensweise ist weitaus effektiver als die Einzelumsetzung von Stückgut und bringt ferner den Vorteil mit sich, dass ohne durch Sensorik erhaltene Vorabinformationen möglichst viele Objekte gleichzeitig umgesetzt werden können. Dabei umfasst die Vorrichtung einfache und robuste Komponenten, die keine aufwändige Sensorik erfordern. Insbesondere in stark schmutzbelasteten Umgebungen ist dies von Vorteil, da es die Vorrichtung weniger wartungsintensiv macht und die Lebensdauer der Vorrichtung erhöht.

Die sequentielle Aufhebung der Greifwirkung der einzelnen Greifelemente und insbesondere die reihenweise Aufhebung der Greifwirkung nach einem festen Schema stellt ein einfaches Verfahren zum Ablegen mehrerer Stückgüter dar, wobei ebenfalls keine aufwändige und störanfällige Sensorik erforderlich ist.

Die erfindungsgemäße Vorrichtung kann vielfältig und ohne Umrüstzeiten eingesetzt werden, wobei insbesondere eine mobile Anlage den Vorteil mit sich bringt, dass sie an verschiedenen Einsatzorten positioniert werden kann. Zur Positionierung der Anlage müssen außer einer Stromversorgung keine weiteren baulichen Maßnahmen vorgesehen sein.

Ein weiterer Vorteil der Vorrichtung liegt in der Anordnung der Greifvorrichtung und der zu entladenden Stückgüter innerhalb des Gehäuses der Vorrichtung. So stellen die konstruktiven Außenmaße der Vorrichtung zugleich den Sicherheitsbereich dar, der durch das Gehäuse der Vorrichtung abgeschirmt wird. Wird die Vorrichtung mobil an einem Ort aufgestellt, sind somit keine weiteren Sicherheitsschranken nötig, um die beweglichen Komponenten der Vorrichtung gegen den Außenbereich abzusichern. Das Gehäuse lässt lediglich das Positionieren eines Behälters oder einer Palette innerhalb des Gehäuses zu, was auf einfache Weise beispielsweise mit einem Hubwagen oder Gabelstapler erfolgen kann.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein bevorzugtes Ausführungsbeispiel der erfindungsgemäßen Vorrichtung mit angehobenen Stückgütern;
- Fig. 2: eine Vorrichtung gemäß Figur 1 mit umgesetzten Stückgütern;
- Fig. 3: eine Vorrichtung gemäß Figur 1 mit abgelegten Stückgütern;
- Fig. 4: die Seitenansicht eines weiteren Ausführungsbeispiels der erfindungsgemäßen Vorrichtung;
- Fig. 5: ein Ausführungsbeispiel für die Anordnung mehrerer Saugeinrichtungen in einer Greifvorrichtung; und
- Fig. 6: ein Ausführungsbeispiel für die Ansteuerung mehrerer Saugeinrichtungen in einer Greifvorrichtung.

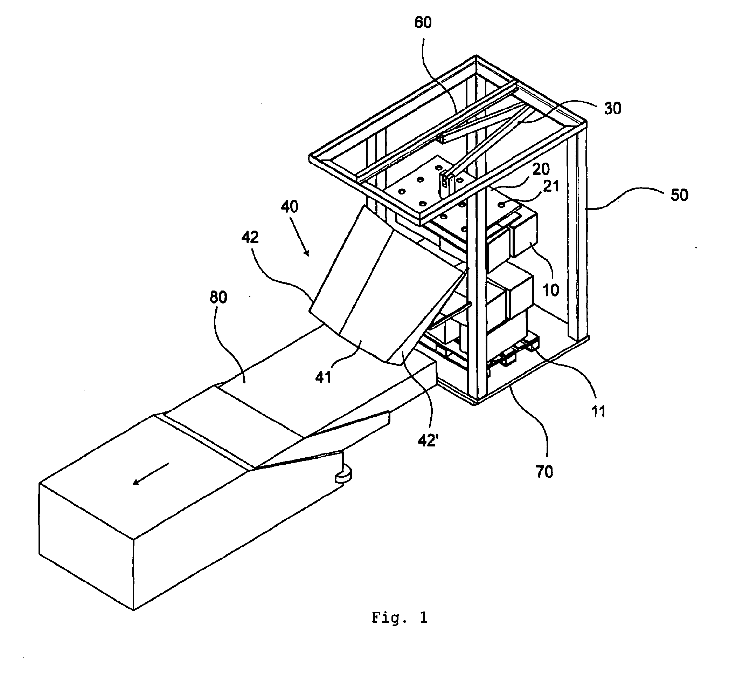

Anhand Fig. 1 wird ein bevorzugtes Ausführungsbeispiel der erfindungsgemäßen Vorrichtung erläutert. Diese Vorrichtung wird im Folgenden auch als Depalettieranlage bezeichnet, da die Vorrichtung insbesondere zur automatisierten Entnahme von Stückgütern von einer Palette geeignet ist und beispielhaft anhand dieses Vorgangs erläutert werden soll. Bei den zu depalettierenden Stückgütern kann es sich um jegliche Güter handeln, die durch eine geeignete Greifvorrichtung angehoben werden können. Die Stückgüter können beispielsweise in Kartons, Schachteln, Papier oder Folien verpackt sein und sind typischerweise quaderförmig. Die Stückgüter können gleiche oder unterschiedliche Abmessungen haben und gleichmäßig oder ungleichmäßig auf der Palette angeordnet sein.

Die in Fig. 1 dargestellte Depalettieranlage umfasst ein Gehäuse 50, in welchem eine Antriebsvorrichtung 30 angeordnet ist. Das Gehäuse wird in diesem Ausführungsbeispiel durch eine Portalkonstruktion aus wenigstens vier im Wesentlichen senkrecht stehenden Seitenstreben gebildet, die an ihren oberen Enden durch wenigstens vier weitere Querstreben miteinander verbunden sind. Erfordert es die Stabilität des Gehäuses, können weitere Streben vorgesehen sein. Es ist ferner möglich, das Gehäuse durch ein Portal beispielsweise aus nur zwei Seitenstreben und einer oberen Querstrebe zu bilden.

Das Gehäuse kann wie in Fig. 1 an den Seiten vollständig offen ausgeführt sein. Zwischen den senkrechten Seitenstreben können jedoch auch Seitenwände vorgesehen sein. Lediglich wenigstens eine Seite ist zweckmäßigerweise offen oder mit einer Tür ausgeführt, um Paletten mit Stückgütern in die Vorrichtung einstellen und leere Paletten wieder entnehmen zu können. Die dieser offenen Seite gegenüber liegende Seite ist im Wesentlichen ebenfalls offen ausgeführt, um die Stückgüter aus dem Gehäuse 50 heraus in eine bestimmte Position umsetzen zu können.

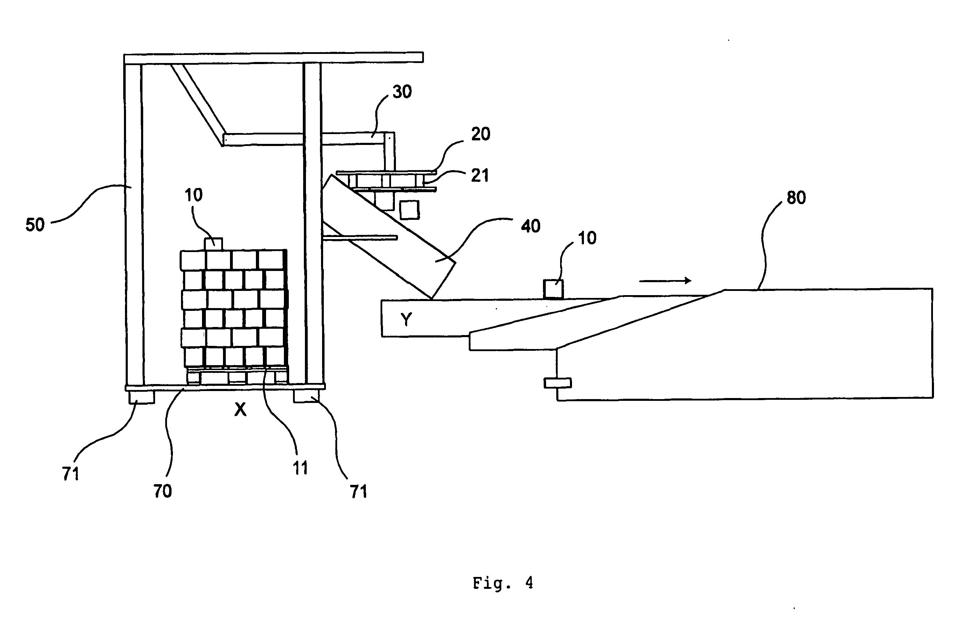

Die Seitenstreben sind vorzugsweise auf einer beweglichen Grundplatte 70 angebracht, um den mobilen Transport der gesamten Vorrichtung zu ermöglichen. Die Depalettieranlage kann beispielsweise von einem Gabelstapler aufgenommen und versetzt werden. Für einen sicheren Transport ist die Vorrichtung an der Grundplatte 70 beispielsweise mit Staplertaschen 71 versehen, wie es der Seitenansicht der Vorrichtung in Fig. 4 zu entnehmen ist.

In einem Ausführungsbeispiel der Erfindung ist an wenigstens einer der Seiten- oder Querstreben des Gehäuses 50 eine Schiene 60 angebracht, entlang der die Antriebsvorrichtung 30 horizontal bewegbar ist. In dem in Fig. 1 dargestellten Ausführungsbeispiel der Erfindung erstreckt sich die Schiene 60 zwischen zwei oberen Querstreben. Mittels der Schiene kann die Antriebsvorrichtung innerhalb des Gehäuses 50, das durch das Gerüst an Streben gebildet wird, horizontal bewegt werden.

Die Antriebsvorrichtung 30 ist beispielsweise als Mehrachsroboter, beziehungsweise Knickarmroboter ausgeführt, der mit einer Greifvorrichtung 20 ausgerüstet ist. Durch die Arme und Gelenke des Knickroboters kann die Greifvorrichtung wenigstens vertikal bewegt werden. Der Knickarmroboter kann auch so ausgeführt sein, dass er die Greifvorrichtung nicht nur vertikal, sondern auch horizontal bewegen kann. In diesem Fall ist die Schiene 60 zur horizontalen Verfahrbarkeit der Antriebsvorrichtung nicht oder zumindest nur in verkürzter Form erforderlich. Ein solches Ausführungsbeispiel, bei dem ein Knickarmroboter die Greifvorrichtung nicht nur vertikal, sondern auch horizontal versetzt, ist in Fig. 4 dargestellt. In diesem Fall ist die Schiene 60 als einfache Strebe ausgeführt, an welcher der Knickarmroboter befestigt ist.

In einem anderen Ausführungsbeispiel der Erfindung ist die Antriebsvorrichtung 30 als Linearführungssystem ausgebildet, bei dem die Greifvorrichtung 20 lediglich entlang der Schiene 60 und vertikal verfahren wird.

Die Greifvorrichtung 20 umfasst wenigstens zwei Greifelemente, mit denen Stückgut aufgenommen werden kann. In einem in den Figuren nicht dargestellten Ausführungsbeispiel der Erfindung handelt es sich bei den Greifelementen um Klemmeinrichtungen, mit denen das Stückgut aufgenommen werden kann. Beispielsweise ist auf zwei gegenüber liegenden Seiten der Greifvorrichtung jeweils eine bewegliche Klemmplatte vorgesehen. Durch Bewegung der Klemmplatten aufeinander zu können mehrere Stückgüter zwischen den Platten eingeklemmt und angehoben werden. Zum Ablegen der Stückgüter werden die Klemmplatten durch eine Steuereinrichtung voneinander weg bewegt.

Um ein sequentielles Absetzen von Stückgut zu ermöglichen, sind an den Seiten der Greifvorrichtung beispielsweise mehrere einzelne Klemmplatten vorgesehen, die paarweise angesteuert werden können. So kann die Greifwirkung der Klemmplatten reihenweise gelöst werden, wodurch die zwischen den jeweiligen Klemmplatten gehaltenen Objekte reihenweise herabfallen.

In einem bevorzugten Ausführungsbeispiel der Erfindung umfasst die Greifvorrichtung 20 in einem plattenförmigen Aufbau mehrere Saugelemente 21. Wenigstens zwei dieser Saugeinrichtungen sind jeweils getrennt voneinander an eine in den Figuren nicht dargestellte Unterdruckquelle angeschlossen. Dieser voneinander unabhängige Anschluss an eine Unterdruckquelle und eine entsprechende Steuerung ermöglichen die gezielte Erzeugung oder Auflösung eines Luftunterdrucks an den einzelnen Saugvorrichtungen.

Eine Saugeinrichtung 21 kann mehrere Saugöffnungen 22 zur Aufbringung eines Unterdrucks auf einen Gegenstand umfassen. Als Saugeinrichtung kann somit auch ein Segment aus mehreren Saugöffnungen angesehen werden, wobei die Saugeinrichtung in ihrer Gesamtheit an eine Unterdruckquelle angeschlossen ist. Die mehreren Saugöffnungen dienen dabei der gleichmäßigen Verteilung des Unterdrucks innerhalb des Saugelementes, wobei ferner Saugöffnungen unterschiedlicher Größe vorgesehen sein können.

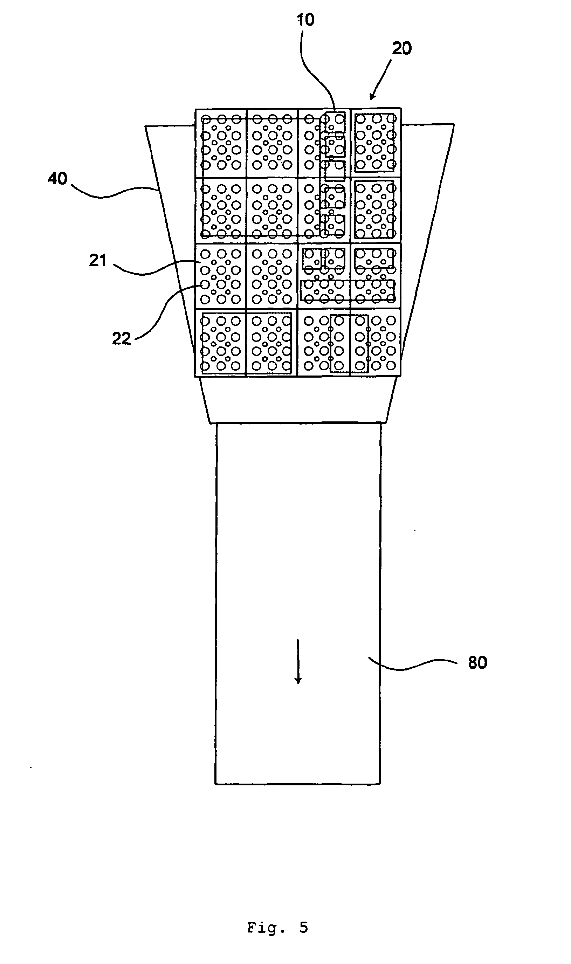

Vorzugsweise sind mehrere solcher Saugeinrichtungen 21 matrixförmig in einer Platte angeordnet, so dass sich wenigstens zwei Reihen jeweils bestehend aus wenigstens zwei Saugeinrichtungen ergeben. Die Anordnung von 16 Saugsegmenten mit mehreren Saugöffnungen 22 ist schematisch in Fig. 5 dargestellt.

Die Anzahl und Anordnung der Saugeinrichtungen 21 ist zweckmäßigerweise an die Abmessungen der zu leerenden Palette und die Größe des aufzunehmenden Stückgutes angepasst. Die Saugeinrichtungen decken vorzugsweise die gesamte Oberfläche der Palette ab, so dass alle darauf befindlichen Stückgüter angesaugt werden können. Die Anzahl der Saugeinrichtungen und die Größe eines durch mehrere Saugöffnungen 22 gebildeten Saugsegmentes richten sich im Wesentlichen nach der durchschnittlichen Größe der Stückgüter. Handelt es sich ausschließlich um sehr große Stückgüter, so dass eine Palette in einer Lage auch nur mit wenigen Objekten beladen ist, sind nur wenige einzeln ansteuerbare Saugeinrichtungen erforderlich. Handelt es sich dagegen um sehr kleine Stückgüter, muss für ein sequentielles Absetzen dieser Stückgüter eine größere Anzahl an einzeln ansteuerbaren Saugeinrichtungen vorhanden sein.

Aus der Fig. 5 ist ersichtlich, dass mit einer 4x4-Matrix aus 16 Saugsegmenten 21, die jeweils aus mehreren Saugöffnungen 22 bestehen, eine Europalette mit den Abmessungen 1200 x 800 mm (Länge x Breite) abgedeckt werden kann, wobei Stückgüter verschiedener Größe aufgenommen werden können. Die aufgenommenen Stückgüter 10 sind in Fig. 5 mit einer gestrichelten Linie dargestellt. Größere Stückgüter werden von mehreren Saugeinrichtungen 21 gleichzeitig gehalten, während andere Saugsegmente mehrere kleine Stückgüter halten können. Befindet sich in einer Lage an einer Position kein Stückgut oder kann ein Stückgut aufgrund seiner Höhe nicht angesaugt werden, bleiben einzelne Saugelemente unbesetzt. Durch den voneinander unabhängigen Anschluss an die Unterdruckquelle entsteht dadurch jedoch kein Druckverlust.

Um mit der Vorrichtung Paletten unterschiedlicher Beladung entleeren zu können, kann die Greifvorrichtung auswechselbar sein, so dass für verschiedene Anforderungen unterschiedliche Greifvorrichtungen eingesetzt werden können.

Die Depalettieranlage kann sich beispielsweise fest installiert vor einem Förderband 80 befinden, mit dem Stückgüter sequentiell zu einem Zielort transportiert werden. Wird die Vorrichtung als mobile Einrichtung ausgeführt, die an verschiedenen Orten aufstellbar ist, kann sie beispielsweise mit einem Gabelstapler zu einem Förderband transportiert und dort an einer definierten Position eingerichtet werden. Zur Fixierung der Vorrichtung können im Gebäudeboden Verankerungen vorgesehen sein. Ist dies nicht der Fall, kann die Anlage so ausgebildet sein, dass sie durch ihr Eigengewicht auf der Grundplatte eine ausreichende Stabilität gewährleistet.

Eine mobile Depalettieranlage ist vorzugsweise so ausgebildet, dass sie an einem Einsatzort auf einfache Weise an eine Stromversorgung angeschlossen werden kann. Zweckmäßigerweise weist die Vorrichtung eine eigene Druckluftversorgung, beziehungsweise Unterdruckerzeugung auf, so dass für den Betrieb nur Strom erforderlich ist.

Ein weiteres Merkmal der Depalettieranlage ist eine Führungseinrichtung 40, mit welcher die von der Greifvorrichtung aufgenommenen Stückgüter zu einer bestimmten Position lenkbar sind. In dem in Fig. 1 dargestellten Ausführungsbeispiel handelt es sich bei dieser Führungseinrichtung um ein Leitblech 40, das zwischen zwei Seitenstreben des Gehäuses angebracht ist. Das Leitblech besteht aus einer Bodenplatte 41 und zwei Seitenwänden 42 und 42', die von der Depalettieranlage wegweisend abwärts geneigt sind. Die Seitenwände des Leitbleches laufen ferner trichterförmig aufeinander zu, so dass Stückgüter, die auf dem Leitblech abgesetzt werden, in die Mitte des Bleches und nach unten rutschen. Diese Schrägstellung des Leitblechs ist insbesondere der Seitenansicht in Fig. 4 zu entnehmen.

Das mit der erfindungsgemäßen Vorrichtung zwischen zwei Positionen umzusetzende Stückgut 10 wird auf einer Transporteinrichtung/Trageinrichtung zur Vorrichtung transportiert und in diese eingebracht. Bei der Transporteinrichtung handelt es sich beispielsweise um eine Palette oder einen Behälter. Auf einer Palette sind die Stückgüter in mehreren Lagen nebeneinander und übereinander gestapelt. Um von der erfindungsgemäßen Vorrichtung aufgenommen werden zu können, sind Stückgüter in Behältern vorzugsweise ebenfalls in mehreren Lagen gestapelt. Da sich die erfindungsgemäße Vorrichtung insbesondere zur Entnahme von Paketen von Paletten eignet, wird die Vorrichtung im Folgenden anhand dieses Vorgangs erläutert. Die auf der Palette gestapelten Pakete 10 können unterschiedlich groß sein, so dass sich insbesondere ihre Höhen unterscheiden.

Eine Palette 11 wird in das Gehäuse 50 eingebracht und dort vorzugsweise an einem oder mehreren Anschlägen ausgerichtet, so dass die Palette eine definierte Position innerhalb der Vorrichtung einnimmt. Von dieser ersten Position X innerhalb des Gehäuses 50 sollen die Stückgüter zu einer zweiten Position Y außerhalb des Gehäuses umgesetzt werden. Die Palette wird zweckmäßigerweise so ausgerichtet, dass sie sich so unterhalb der Greifvorrichtung 20 befindet, dass alle Pakete 10 von den Saugvorrichtungen der Greifvorrichtung erfasst werden können. Die horizontalen Abmessungen der Greifvorrichtung entsprechen somit vorzugsweise wenigstens den Abmessungen einer verwendeten Palette. Um auch Behälter mit Seitenwänden entladen zu können, sind die Abmessungen der Greifvorrichtung so gewählt, dass sich die Greifvorrichtung in den Behälter absenken lässt.

Ist die Palette ausgerichtet, wird der Depalettiervorgang gestartet. Dies kann beispielsweise über die manuelle Auslösung eines Schalters in einem Bedienfeld erfolgen. Die Greifvorrichtung senkt sich daraufhin mittels der Antriebsvorrichtung 30 auf die oberste Lage an Paketen ab. Sobald die Greifvorrichtung Kontakt mit den obersten Paketen hat, wird der Absenkvorgang durch einen Z-Ausgleich gebremst und die Greifvorrichtung nur noch so weit abgesenkt, dass die Greifvorrichtung einen ausreichenden Druck auf die obersten Pakete aufbringt, um diese durch Unterdruck in den einzelnen Saugvorrichtungen 21 ansaugen zu können.

Der Greifer kann dabei durch einen Abstandssensor taktil oder berührungslos an die oberste Lage herangeführt werden. Der Greifer weist dazu beispielsweise einen Greiferflansch mit einem Bewegungsausgleich in Z-Richtung auf. Die Position des Z-Ausgleichs kann sensorisch abgefragt und der Greifer ab einer definierten Position abgebremst werden.

Nachdem die Greifvorrichtung in der richtigen Höhe abgebremst wurde, wird auf die Saugvorrichtungen 21 der Greifvorrichtung mittels der Unterdruckquelle ein Unterdruck aufgebracht. Die oberen Pakete werden dadurch an der Platte der Greifvorrichtung gehalten, wenn diese durch den Knickarmroboter 30 vertikal nach oben verfahren wird, wie es in Fig. 1 dargestellt ist. Dabei werden nur die Pakete mit der größten Höhe angehoben, während kleinere Pakete der obersten Lage auf der Palette verbleiben.

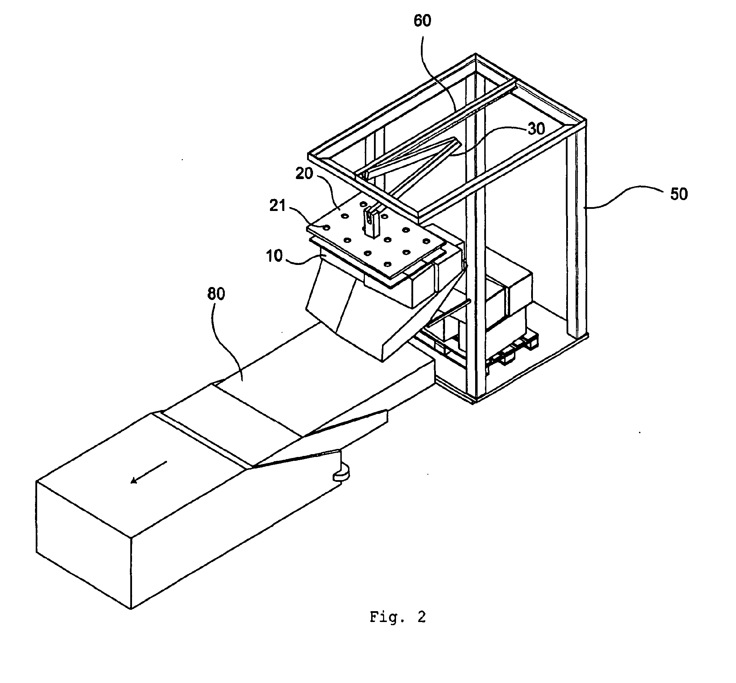

Hat die Greifvorrichtung 20 eine definierte Mindesthöhe erreicht, wird sie zusammen mit der Antriebsvorrichtung 30 über die Schiene 60 horizontal verfahren. Die Antriebsvorrichtung wird soweit verfahren, bis sich die Greifvorrichtung und damit die aufgenommenen Pakete oberhalb des Leitbleches 40 befinden, wie es in Fig. 2 dargestellt ist. Das Leitblech sollte dazu in einer geeigneten Höhe angebracht sein, die von der Antriebsvorrichtung überwunden werden kann.

In dem in Fig. 4 dargestellten Ausführungsbeispiel der Erfindung erfolgt auch die horizontale Bewegung der Greifvorrichtung mit den aufgenommenen Paketen 10 über den Knickarmroboter, so dass kein Verfahren der Antriebsvorrichtung über eine Schiene erforderlich ist. Alternativ kann die horizontale Bewegung teilweise durch Winkelbewegungen des Knickarmroboters und durch Verfahren des Roboters auf der Schiene erfolgen.

In der so erreichten Position der Pakete oberhalb des Leitbleches wird der Unterdruck in den Saugvorrichtungen 21 der Greifvorrichtung 20 sequentiell abgeschaltet, so dass die aufgenommenen Pakete nacheinander auf das Leitblech fallen. Dabei können alle Saugvorrichtungen einzeln oder Bereiche von mehreren Saugvorrichtungen gemeinsam entlüftet werden. Die sequentielle Abschaltung des Unterdrucks bedeutet im Zusammenhang mit dieser Erfindung, dass einzelne Saugeinrichtungen oder Bereiche mit mehreren Saugeinrichtungen zeitlich versetzt und somit nacheinander belüftet werden.

Werden ganze Bereiche von Saugvorrichtungen entlüftet und halten einzelne Saugeinrichtungen mehrere sehr kleine Pakete, kann dabei der Fall eintreten, dass mehrere Pakete gleichzeitig herabfallen. Dies ist jedoch für die Funktionsweise der Vorrichtung unschädlich, da die Pakete durch das Leitblech 40 nacheinander auf das Förderband geführt werden. Insbesondere im postalischen Bereich ist es ferner unschädlich, wenn mehrere kleine Pakete sogar nebeneinander auf das Förderband rutschen und nur leicht versetzt zueinander abtransportiert werden.

Erfindungsgemäß erfolgt die Aufhebung der Greifwirkung der Greifelemente nach einem festen Schema. Dabei hat es sich als besonders vorteilhaft erwiesen, dass die Steuerungsmittel der Vorrichtung eine reihenweise Aufhebung der Greifwirkung auslösen. Bei Klemmeinrichtungen wird somit jeweils ein Paar von Klemmplatten voneinander weg bewegt, um die dazwischen eingeklemmte Reihe an Paketen freizugeben. Bei Saugeinrichtungen wird der Unterdruck in einer Reihe von Saugelementen aufgehoben. Vorzugsweise verläuft diese zuerst aktivierte Reihe an Saug- oder Klemmelementen im Wesentlichen entlang der Transportrichtung des Transportbandes 80, so dass die Pakete in Längsrichtung zur Transportrichtung abgesetzt werden. Die daneben liegenden Reihen an Greifelementen werden nacheinander gelöst.

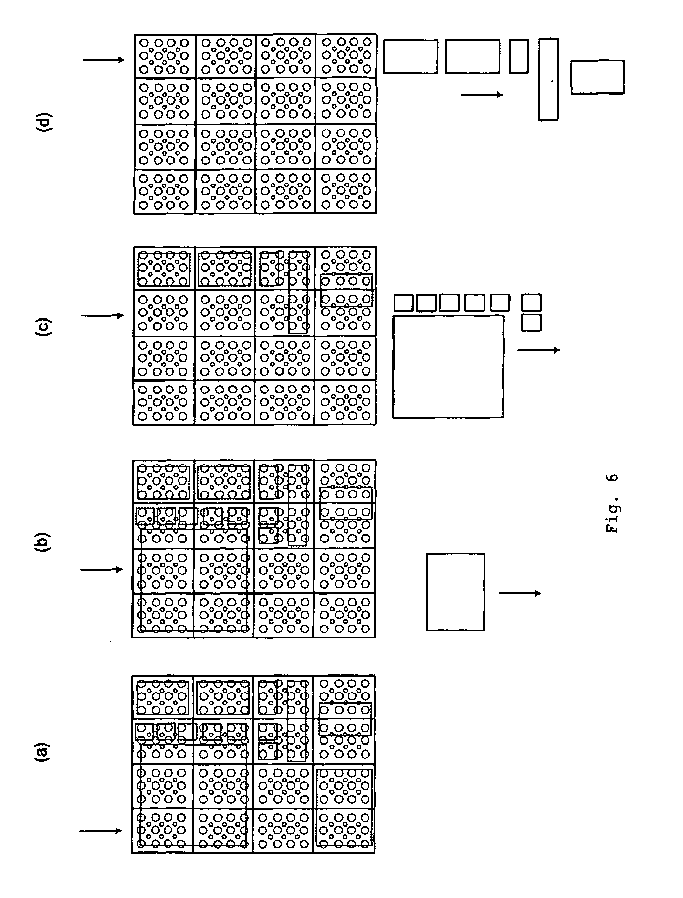

Dieses Schema bei der reihenweisen Aufhebung des Unterdrucks von Saugeinrichtungen ist in Fig. 6 dargestellt, wobei die jeweils entlüftete Reihe und der Transport von Paketen auf einem Transportband mit einem Pfeil gekennzeichnet ist. Bei Klemmelementen ist das Schema analog anwendbar.

In Schritt (a) wird die äußere linke Reihe von Saugeinrichtungen entlüftet, die sich entlang der Transportrichtung des Förderbandes erstreckt. Da an dieser Reihe zwei große Pakete hängen, die auch von Saugeinrichtungen der zweiten Reihe gehalten werden, fallen die Pakete voraussichtlich noch nicht herab. Sobald in Schritt (b) die zweite Reihe entlüftet wird, wird das kleinere der beiden Pakete nicht mehr gehalten und fällt auf das Leitblech. Das größere der Pakete wird zwar noch durch Saugeinrichtungen der dritten Reihe gehalten, könnte jedoch aufgrund seines Gewichts ebenfalls schon herabfallen. Spätestens jedoch in Schritt (c) fällt das große Paket bei der Entlüftung der dritten Reihe zusammen mit mehreren kleineren Paketen herab. In Schritt (d) fallen die verbleibenden Pakete aus der vierten Reihe auf das Förderband, beziehungsweise Leitblech.

Die Pakete fallen somit einzeln oder in Gruppen auf das Leitblech, sie werden jedoch einzeln und im Wesentlichen nacheinander von dem Transportband abtransportiert. Damit die in Transportrichtung hinten liegenden Pakete nicht durch davor hängende größere Pakete blockiert werden, wenn diese erst bei Belüftung der nächsten Reihe herabfallen, wird die Höhe der Greifvorrichtung beim Absetzvorgang vorzugsweise so gewählt, dass hinten herabfallende Pakete auf dem Leitblech unter davor hängenden Paketen hindurch gleiten können.

Um Paletten mit verschiedenen Stückgütern entladen zu können, kann nicht nur die Greifvorrichtung auswechselbar sein, sondern auch das Schema bei der Aufhebung der Greifwirkung der einzelnen Greifelemente kann variiert werden. Beispielsweise kann eine Bedienperson in einem Bedienmenü eingeben, um welche Art des Stückguts und insbesondere um welche Stückgutabmessungen es sich bei einer Palette handelt. Die Ansteuerung der Greifelemente wird dann entsprechend angepasst. Beispielsweise werden bei kleineren Stückgütern die kleinsten Bereiche mit Greifelementen angesteuert, während bei größeren Stückgütern die Ansteuerung größerer Bereiche ausreicht, um ein sequentielles Absetzen der Gegenstände zu ermöglichen.

Die Aufhebung des Unterdrucks einer Reihe mit Saugeinrichtungen 21 wird entsprechend mit dem Vorschub des Förderbandes 80 getaktet. Dazu kann die Fördergeschwindigkeit des Transportbandes beispielsweise vor Inbetriebnahme der Depalettieranlage manuell von einer Bedienperson über ein Menü eingegeben werden oder die Fördergeschwindigkeit des Bandes wird an die Taktzeit der Depalettieranlage angepasst.

Der Abstand zwischen der Greifvorrichtung 20 und dem Leitblech 40 sollte so gewählt werden, dass die Pakete bei der Ablösung nicht beschädigt werden. Gegebenenfalls kann die Greifvorrichtung 20 nach der horizontalen Bewegung durch den Knickarmroboter 30 erneut vertikal abwärts bewegt werden, um einen zu großen Höhenunterschied auszugleichen.

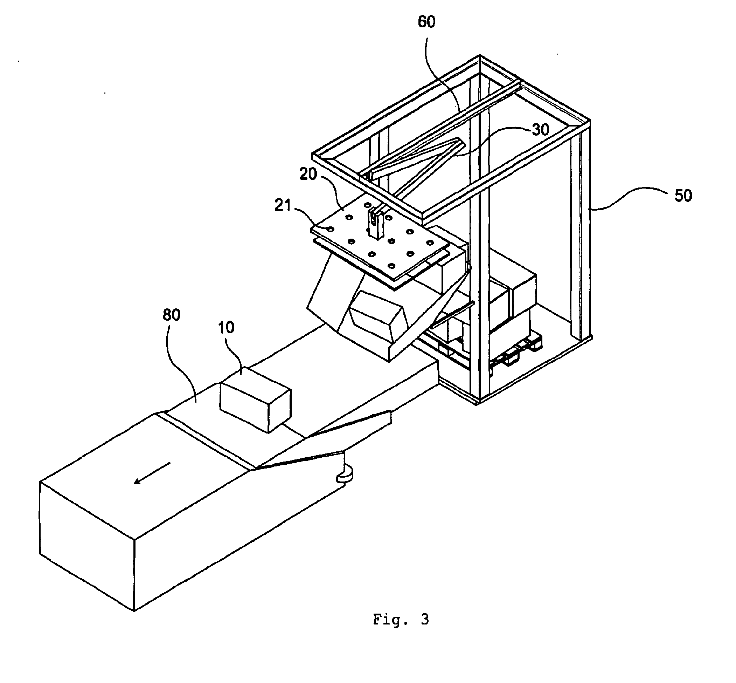

Die Pakete rutschen nun einzeln auf dem Leitblech auf das Transportband 80 und werden so auf diese zweite Position Y umgesetzt. Ist das Leitblech mit trichterförmig aufeinander zulaufenden Seitenwänden ausgeführt, erfolgt ferner eine Lenkung der Pakete zur Mitte des Transportbandes. Die Pakete werden von dem Transportband nacheinander abtransportiert, wie es in Fig. 3 dargestellt ist.

Sind alle Saugvorrichtungen entlüftet, wird die Greifvorrichtung wieder in die Position X oberhalb der Palette 11 verfahren und der Vorgang startet erneut. Verblieben aufgrund ihrer geringeren Größe in der oberen Lage des Paketstapels einzelne Pakete, werden diese nun aufgenommen und auf das Leitblech 40 umgesetzt. Die Vorrichtung setzt somit stets die Pakete um, deren obere Seite angesaugt werden kann, bis alle Pakete von der Palette entnommen wurden. Dazu muss die Vorrichtung beim Depalettiervorgang zwar eine größere Anzahl an Umsetzvorgängen durchführen, es ist jedoch keine aufwändige Sensorik erforderlich, um vor oder während des Aufnahmevorgangs die Anzahl und Position von Paketen zu bestimmen.

Sobald alle Pakete von der Palette 11 entnommen wurden und die Greifvorrichtung sich erneut über der nun leeren Palette absenkt, wird dieser Zustand durch einen Sensor detektiert und es wird kein erneuter Ansaufvorgang durchgeführt. Dies kann beispielsweise so erfolgen, dass geringfügig oberhalb der Palette ein Sensor vorgesehen ist, welcher das Absenken der Greifvorrichtung unterhalb dieser definierten Höhe detektiert und der Vorrichtung dadurch signalisiert, dass keine weiteren Pakete zur Aufnahme vorhanden sind und der Umsetzvorgang beendet werden kann. Bei diesem Sensor kann es sich beispielsweise um eine Lichtschranke handeln.

In einem weiteren Ausführungsbeispiel tastet eine Lichtschranke kontinuierlich die Oberfläche der Palette ab und erzeugt ein Signal, sobald auf der Palette keine Gegenstände mehr registriert werden. In diesem Fall wird der Depalettiervorgang gestoppt, bevor sich die Greifvorrichtung nochmals auf die leere Palette absenken würde. Alternativ kann die Antriebsvorrichtung selbst mit einem Sensor versehen sein, der ein Absenken unter eine definierte Höhe detektiert und so den Umsetzvorgang abbricht.

Sobald der Entladungsvorgang beendet ist, kann die Vorrichtung ein akustisches und/oder optisches Signal erzeugen, um Bedienungspersonal darauf aufmerksam zu machen, dass eine leere Palette entnommen werden kann. Nach Einstellung einer neuen Palette mit Paketen wird der Vorgang erneut gestartet. Sind alle Paletten für den Zielort des Förderbandes entleert, kann die Depalettiervorrichtung zu einem anderen Förderband transportiert und dort eingesetzt werden.

In einem weiteren Ausführungsbeispiel der Erfindung kann die Greifvorrichtung 20 durch die Antriebsvorrichtung zusätzlich um eine vertikale Achse gedreht werden, so dass Pakete von einer Palette innerhalb des Gehäuses 50 aufgenommen und auf zwei oder mehr Seiten der Vorrichtung abgesetzt werden können. So können Pakete beispielsweise abwechselnd auf zwei verschiedenen Förderbändern abgesetzt werden, ohne dass die Depalettieranlage versetzt werden muss.

### Bezugszeichenliste:

- 10: Stückgut, Paket
- 11: Transporteinrichtung, Trageinrichtung, Palette, Behälter
- 20: Greifvorrichtung
- 21: Saugeinrichtung
- 22: Saugöffnung
- 30: Antriebsvorrichtung, Knickarmroboter
- 40: Führungseinrichtung, Leitblech
- 41: Bodenplatte Leitblech
- 42, 42': Seitenwand Leitblech
- 50: Gehäuse; Portal
- 60: Schiene
- 70: Grundplatte
- 71: Staplertasche
- 80: Förderband

## Patentansprüche

1. Vorrichtung zur umsetzung von Stückgut (10) von einer ersten Position X zu einer zweiten Position Y, wobei die Vorrichtung wenigstens eine Greifvorrichtung (20) aufweist, die über eine Antriebsvorrichtung (30) in vertikaler Richtung und in wenigstens einer horizontalen Richtung bewegbar ist und die Greifvorrichtung (20) mehrere Greifelemente umfasst, von denen jeweils wenigstens zwei getrennt voneinander ansteuerbar sind und die Vorrichtung Steuerungsmittel zur sequentiellen Aufhebung der Greifwirkung der Greifelemente aufweist, wobei
die Steuerungsmittel für eine sequentielle Aufhebung der Greifwirkung der Greifelemente nach einem festen Schema ausgebildet sind, und die Vorrichtung eine Führungseinrichtung (40) zur Lenkung des Stückguts (10) auf die zweite Position Y aufweist, **dadurch gekennzeichnet, dass** die Führungseinrichtung (40) durch ein schräg gestelltes Leitblech mit einem Bodenblech (41) und zwei Seitenwänden (42;42') gebildet wird, welche trichterförmig aufeinander zulaufen.

2. vorrichtung nach Anspruch 1,
**dadurch gekennzeichnet,**
**dass** die Greifvorrichtung wenigstens zwei Reihen aus jeweils wenigstens zwei Greifelementen umfasst und die Steuerungsmittel der Vorrichtung für eine reihenweise Aufhebung der Greifwirkung der Greifelemente ausgebildet sind.

3. Vorrichtung nach einem oder beiden der Ansprüche 1 und 2,
**dadurch gekennzeichnet,**
**dass** die Greifelemente Klemmeinrichtungen sind, mit denen das Stückgut aufnehmbar ist, wobei die Klemmwirkung der Klemmeinrichtungen sequentiell auflösbar ist.

4. Vorrichtung nach einem oder beiden der Ansprüche 1 und 2,
**dadurch gekennzeichnet,**
**dass** die Greifelemente Saugeinrichtungen (21) sind, von denen wenigstens zwei jeweils getrennt voneinander mit einer Unterdruckquelle verbunden sind und die Vorrichtung Steuerungsmittel zur sequentiellen Auflösung des Unterdrucks in den Saugeinrichtungen (21) aufweist.

5. Vorrichtung nach einem oder mehreren der vorangegangenen Ansprüche 1 bis 4,
**dadurch gekennzeichnet,**
**dass** sich die Antriebsvorrichtung (30) innerhalb eines Gehäuses (50) befindet, das oberhalb der ersten Position X angeordnet ist.

6. Vorrichtung nach Anspruch 5,
dadurch gekenntzeichnet,
dass das Gehäuse (50) in Portalbauweise durch wenigstens zwei im Wesentlichen senkrecht stehende Seitenstreben und eine obere Querstrebe gebildet wird.

7. Vorrichtung nach Anspruch 6,
**dadurch gekennzeichnet,**
**dass** das Gehäuse (50) durch vier in einem Rechteck angeordnete, im Wesentlichen senkrecht stehende Seitenstreben und vier, die Seitenstreben verbindende, obere Querstreben gebildet wird.

8. Vorrichtung nach einem oder mehreren der vorangegangenen Ansprüche 1 bis 7,
**dadurch gekennzeichnet,**
**dass** die Antriebsvorrichtung (30) ein Knickarmroboter ist, der am Gehäuse (50) angebracht ist.

9. Vorrichtung nach Anspruch 8,
**dadurch gekennzeichnet,**
**dass** der Knickarmroboter über eine Schiene (60) in horizontaler Richtung bewegbar ist.

10. Vorrichtung nach einem oder mehreren der Ansprüche 6 bis 9,
**dadurch gekennzeichnet,**
**dass** die Schiene (60) an wenigstens einer oberen Querstrebe des Gehäuses (50) angebracht ist.

11. Vorrichtung nach einem oder mehreren der Ansprüche 5 bis 10,
**dadurch gekennzeichnet,**
**dass** sich die zweite Position Y außerhalb des Gehäuses (50) befindet.

12. Vorrichtung nach einem oder mehreren der Ansprüche 5 bis 11,
**dadurch gekennzeichnet,**
**dass** die Führungseinrichtung (40) am Gehäuse (50) befestigt ist und sich außerhalb des Gehäuses (50) befindet.

13. Vorrichtung nach einem oder mehreren der Ansprüche 1 bis 12,
**dadurch gekennzeichnet,**
**dass** die Vorrichtung auf einer beweglichen Grundplatte (70) montiert ist.

14. Vorrichtung nach Anspruch 13,
**dadurch gekennzeichnet,**
**dass** an der Grundplatte (70) Mittel zum Eingreifen einer Transportvorrichtung angebracht sind.

15. Vorrichtung nach Anspruch 14,
**dadurch gekennzeichnet,**
**dass** es sich bei den Mitteln zum Eingreifen eines Transportmittels um Staplertaschen (71) handelt.

16. Vorrichtung nach einem oder mehreren der vorangegangenen Ansprüche 1 bis 15,
**dadurch gekennzeichnet,**
**dass** die Vorrichtung in der ersten Position X Mittel zur Ausrichtung einer Trageinrichtung (11) aufweist, auf welcher das Stückgut (10) zur Aufnahme positioniert ist.

17. Verfahren zur Umsetzung von Stückgut (10) von einer ersten Position x zu einer zweiten Position Y, bei dem das Stückgut (10) mit einer Greifvorrichtung (20), die mehrere Greifelemente umfasst, an der ersten Position X aufgenommen wird und die Greifvorrichtung (20) über eine Antriebsvorrichtung (30) in vertikaler Richtung und wenigstens einer horizontalen Richtung zur zweiten Position Y bewegt wird und an der zweiten Position Y Steuerungsmittel wenigstens zwei der Greifelemente getrennt voneinander ansteuern und die Greifwirkung der Greifelemente sequentiell aufheben, wobei
die Steuerungsmittel die sequentielle Aufhebung der Greifwirkung der Greifelemente nach einem festen Schema durchführen, und die Greifvorrichtung (20) mit dem aufgenommenen Stückgut (10) durch die Antriebsvorrichtung (30) an die zweite Position Y oberhalb einer Führungseinrichtung (40) zur Lenkung des Stückguts (10) auf die zweite Position Y verfahren wird, **dadurch gekenntzeichnet**, dass die Führungseinrichtung (40) durch ein schräges Leitblech mit einem Bodenblech (41) und zwei trichterförmig aufeinander zulaufenden Seitenwänden (42;42') gebildet wird.

18. Verfahren nach Anspruch 17,
**dadurch gekennzeichnet,**
**dass** die Greifvorrichtung wenigstens zwei Reihen aus jeweils wenigstens zwei Greifelementen umfasst und die Aufhebung der Greifwirkung der Greifelemente reihenweise erfolgt.

19. Verfahren nach einem oder beiden der vorangegangenen Ansprüche 17 und 18,
**dadurch gekennzeichnet,**
**dass** die Greifelemente Klemmeinrichtungen sind, mit denen das Stückgut aufgenommen wird, und die Klemmwirkung der Klemmeinrichtungen sequentiell aufgelöst wird.

20. Verfahren nach einem oder beiden der vorangegangenen Ansprüche 17 und 18,
**dadurch gekennzeichnet,**
**dass** die Greifelemente Saugeinrichtungen (21) sind, von denen wenigstens zwei jeweils getrennt voneinander mit einer Unterdruckquelle verbunden sind und der Unterdruck in den Saugeinrichtungen (21) sequentiell aufgelöst wird.

21. Verfahren nach einem oder mehreren der vorangegangenen Ansprüche 17 bis 20,
**dadurch gekennzeichnet,**
**dass** das Stückgut (10) von der Antriebsvorrichtung (30) zu einer Position Y oberhalb eines Transportbandes (80) bewegt wird.

22. Verfahren Anspruch 21,
**dadurch gekennzeichnet,**
**dass** sich die wenigstens zwei Reihen aus jeweils wenigstens zwei Greifelementen in Transportrichtung des Transportbanddes (80) erstrecken und die Steuerungsmittel der Vorrichtung die Aufhebung der Greifwirkung der Greifelemente in einer äußeren Reihe beginnen und reihenweise fortsetzen.

23. Verfahren nach einem oder beiden der Ansprüche 21 und 22,
**dadurch gekennzeichnet,**
**dass** die Aufhebung der Greifwirkung der Greifelemente mit dem Vorschub des Transportbandes (80) getaktet wird.

## Claims

1. A device for transferring unit loads (10) from a first position X to a second position Y, whereby the device has at least one gripper (20) that can be moved by means of a drive (30) in the vertical direction and in at least one horizontal direction, and the gripper (20) comprises several gripping elements of which, in each case, at least two can be actuated separately from each other, and the device has control means for sequentially canceling the gripping effect of the gripping elements, whereby the control means for sequentially canceling the gripping effect of the gripping elements are configured according to a fixed pattern, and the device has a guide (40) for steering the unit loads (10) to the second position Y,
**characterized in that**
the guide (40) is formed by a slanted baffle plate having a bottom plate (41) and two side walls (42; 42') which converge like a funnel.

2. The device according to claim 1,
**characterized in that**
the gripper comprises at least two rows, each consisting of at least two gripping elements, and the control means of the device are configured to cancel the gripping effect of the gripping elements row by row.

3. The device according to one or both of claims 1 and 2,
**characterized in that**
the gripping elements are clamping mechanisms with which the unit loads can be picked up, whereby the clamping effect of the clamping mechanisms can be canceled sequentially.

4. The device according to one or both of claims 1 and 2,
**characterized in that**
the gripping elements are suction means (21) of which, in each case, at least two are connected to a source of negative pressure separately from each other, and the device has control means for sequentially canceling the negative pressure in the suction means (21).

5. The device according to one or more of the preceding claims 1 to 4,
**characterized in that** the drive (30) is located inside a housing (50) that is arranged above the first position X.

6. The device according to claim 5,
**characterized in that** the housing (50) has a portal structure made up of at least two essentially vertical side struts and one upper cross strut.

7. The device according to claim 6,
**characterized in that**
the housing (50) is formed by four essentially vertical side struts that are arranged in the form of a rectangle and by four upper cross struts that connect the side struts.

8. The device according to one or more of the preceding claims 1 to 7,
**characterized in that**
the drive (30) is an articulated-arm robot that is installed on the housing (50).

9. The device according to claim 8,
**characterized in that**
the articulated-arm robot can be moved along a rail (60) in the horizontal direction.

10. The device according to one or more of claims 6 to 9,
**characterized in that**
the rail (60) is installed on at least one upper cross strut of the housing (50).

11. The device according to one or more of claims 5 to 10,
**characterized in that**
the second position Y is located outside of the housing (50).

12. The device according to one or more of claims 5 to 11,
**characterized in that**
the guide (40) is attached to the housing (50) and is located outside of the housing (50).

13. The device according to one or more of claims 1 to 12,
**characterized in that**
the device is mounted on a movable baseplate (70).

14. The device according to claim 13,
**characterized in that**
means for engaging with a transport means are installed on the baseplate (70).

15. The device according to claim 14,
**characterized in that**
the means for engaging with a transport means are forklift slots (71).

16. The device according to one or more of the preceding claims 1 to 15,
**characterized in that**,
in the first position X, the device has means for orienting a carrier (11) on which the unit loads (10) are positioned so as to be held.

17. A method for transferring unit loads (10) from a first position X to a second position Y, in which the unit loads (10) are picked up at the first position X by a gripper (20) comprising several gripping elements, and the gripper (20) is moved by a drive (30) in the vertical direction and in at least one horizontal direction to a second position Y, and, at the second position Y, control means actuate at least two of the gripping elements separately from each other and sequentially cancel the gripping effect of the gripping elements, whereby the control means carry out the sequential cancelation of the gripping effect of the gripping elements according to a fixed pattern, and the gripper (20) with the picked-up unit loads (10) is moved by the drive (30) at the second position Y above a guide (40) in order to steer the unit loads (10) to the second position Y,
**characterized in that**
the guide (40) is formed by a slanted baffle plate having a bottom plate (41) and two side walls (42; 42') that converge like a funnel.

18. The method according to claim 17,
**characterized in that**
the gripper comprises at least two rows, each consisting of at least two gripping elements and the gripping effect of the gripping elements is canceled row by row.

19. The method according to one or both of the preceding claims 17 and 18,
**characterized in that**
the gripping elements are clamping mechanisms with which the unit loads are picked up, and the clamping effect of the clamping mechanisms is canceled sequentially.

20. The method according to one or both of the preceding claims 17 and 18,
**characterized in that**
the gripping elements are suction means (21) of which, in each case, at least two are connected to a source of negative pressure separately from each other, and the negative pressure in the suction means (21) is sequentially canceled.

21. The method according to one or more of the preceding claims 17 to 20,
**characterized in that**
the unit loads (10) are moved by the drive (30) to a position Y above a conveyor belt (80).

22. The method according to claim 21,
**characterized in that**
the at least two rows, each made up of at least two gripping elements, extend in the conveying direction of the conveyor belt (80), and the control means of the device start canceling the gripping effect of the gripping elements in an outer row and then proceed row by row.

23. The method according to one or both of claims 21 and 22,
**characterized in that**
the cancelation of the gripping effect of the gripping elements is synchronized with the advancing of the conveyor belt (80).

## Revendications

1. Dispositif pour transférer des marchandises de détail (10) d'une première position X vers une deuxième position Y, le dispositif comportant un moins un dispositif de préhension (20) qui peut être déplacé en direction verticale et dans au moins une direction horizontale par l'intermédiaire d'un dispositif d'entraînement (30) et le dispositif de préhension (20) comprenant plusieurs éléments de préhension dont respectivement au moins deux peuvent être commandés séparément l'un de l'autre et le dispositif comportant des moyens de commande pour annuler séquentiellement l'action de préhension des éléments de préhension, les moyens de commande pour une annulation séquentielle de l'action de préhension des éléments de préhension étant réalisés selon un schéma fixe et le dispositif comportant un équipement de guidage (40) pour diriger les marchandises de détail (10) vers la deuxième position Y, **caractérisé en ce que** l'équipement de guidage (40) est réalisé par une tôle de guidage posée en oblique avec une tôle de fond (41) et deux parois latérales (42, 42') qui convergent en entonnoir.

2. Dispositif selon la revendication 1, **caractérisé en ce que** le dispositif de préhension comprend au moins deux rangées de respectivement au moins deux éléments de préhension et **en ce que** les moyens de commande du dispositif sont réalisés pour annuler par rangée l'action de préhension des éléments de préhension.

3. Dispositif selon l'une ou les deux revendications 1 et 2, **caractérisé en ce que** les éléments de préhension sont des équipements de serrage permettant de prendre les marchandises de détail, l'action de serrage des équipements de serrage pouvant être annulée séquentiellement.

4. Dispositif selon l'une ou les deux revendications 1 et 2, **caractérisé en ce que** les éléments de préhension sont des équipements d'aspiration (21) dont au moins deux sont reliés, respectivement séparément l'un de l'autre, à une source de pression négative et **en ce que** le dispositif comporte des moyens de commande pour annuler séquentiellement la pression négative dans les équipements d'aspiration (21).

5. Dispositif selon l'une ou plusieurs des revendications précédentes 1 à 4, **caractérisé en ce que** le dispositif d'entraînement (30) se trouve à l'intérieur d'un boîtier (50) qui est situé au-dessus de la première position X.

6. Dispositif selon la revendication 5, **caractérisé en ce que** le boîtier (50) est une construction en portique réalisée par au moins deux montants latéraux sensiblement verticaux et une traverse supérieure.

7. Dispositif selon la revendication 6, **caractérisé en ce que** le boîtier (50) est constitué de quatre montants latéraux sensiblement verticaux disposés en rectangle et quatre traverses supérieures qui relient les montants latéraux.

8. Dispositif selon l'une ou plusieurs des revendications précédentes 1 à 7, **caractérisé en ce que** le dispositif d'entraînement (30) est un robot à bras articulé qui est monté sur le boîtier (50).

9. Dispositif selon la revendication 8, **caractérisé en ce que** le robot à bras articulé peut être déplacé en direction horizontale par l'intermédiaire d'un rail (60).

10. Dispositif selon l'une ou plusieurs des revendications 6 à 9, **caractérisé en ce que** le rail (60) est monté sur au moins une traverse supérieure du boîtier (50).

11. Dispositif selon l'une ou plusieurs des revendications 5 à 10, **caractérisé en ce que** la deuxième position Y se trouve en dehors du boîtier (50).

12. Dispositif selon l'une ou plusieurs des revendications 5 à 11, **caractérisé en ce que** l'équipement de guidage (40) est fixé sur le boîtier (50) et se trouve en dehors du boîtier (50).

13. Dispositif selon l'une ou plusieurs des revendications 1 à 12, **caractérisé en ce que** le dispositif est monté sur une plaque de base mobile (70).

14. Dispositif selon la revendication 13, **caractérisé en ce que** des moyens permettant l'engagement d'un dispositif de transport sont montés sur la plaque de base (70).

15. Dispositif selon la revendication 14, **caractérisé en ce que** les moyens permettant l'engagement d'un moyen de transport sont des passages pour fourches de chariot élévateur (71).

16. Dispositif selon l'une ou plusieurs des revendications précédentes 1 à 15, **caractérisé en ce que** le dispositif présente, à la première position X, des moyens pour orienter un équipement de support (11) sur lequel les marchandises de détail (10) sont positionnées pour être prises.

17. Procédé pour transférer des marchandises de détail (10) d'une première position X vers une deuxième position Y, dans lequel les marchandises de détail (10) sont prises à la première position X par un dispositif de préhension (20) qui comprend plusieurs éléments de préhension et le dispositif de préhension (20) est déplacé vers la deuxième position Y en direction verticale et dans au moins une direction horizontale par l'intermédiaire d'un dispositif d'entraînement (30) et, à la deuxième position Y, des moyens de commande commandent au moins deux des éléments de préhension séparément l'un de l'autre et annulent séquentiellement l'action de préhension des éléments de préhension, les moyens de commande exécutant l'annulation séquentielle de l'action de préhension des éléments de préhension selon un schéma fixe et le dispositif de préhension (20) avec les marchandises de détail prises (10) étant déplacé par l'unité d'entraînement (30) vers la deuxième position Y au-dessus d'un équipement de guidage (40) pour diriger les marchandises de détail (10) vers la deuxième position Y, **caractérisé en ce que** l'équipement de guidage (40) est réalisé par une tôle de guidage posée en oblique avec une tôle de fond (41) et deux parois latérales (42, 42') qui convergent en entonnoir.

18. Procédé selon la revendication 17, **caractérisé en ce que** le dispositif de préhension comprend au moins deux rangées de respectivement au moins deux éléments de préhension et **en ce que** l'annulation de l'action de préhension des éléments de préhension s'effectue par rangée.

19. Procédé selon l'une ou les deux revendications précédentes 17 et 18, **caractérisé en ce que** les éléments de préhension sont des équipements de serrage permettant de prendre les marchandises de détail et **en ce que** l'action de serrage des équipements de serrage peut être annulée séquentiellement.

20. Procédé selon l'une ou les deux revendications précédentes 17 et 18, **caractérisé en ce que** les éléments de préhension sont des équipements d'aspiration (21) dont au moins deux sont reliés, respectivement séparément l'un de l'autre, à une source de pression négative et **en ce que** la pression négative est annulée séquentiellement dans les équipements d'aspiration (21).

21. Procédé selon l'une ou plusieurs des revendications précédentes 17 à 20, **caractérisé en ce que** les marchandises de détail (10) sont déplacées par le dispositif d'entraînement (30) vers une position Y au-dessus d'une bande de transport (80).

22. Procédé selon la revendication 21, **caractérisé en ce que** les au moins deux rangées de respectivement au moins deux éléments de préhension s'étendent dans le sens du transport de la bande de transport (80) et **en ce que** les moyens de commande du dispositif commencent à annuler l'action de préhension des éléments de préhension dans une rangée extérieure et continuent par rangée.

23. Procédé selon l'une ou les deux revendications 21 et 22, **caractérisé en ce que** l'annulation de l'action de préhension des éléments de préhension est cadencée sur l'avancement de la bande de transport (80).
